# EUROPÄISCHE PATENTSCHRIFT

(11) **EP 1 182 346 B1**
(45) Veröffentlichungstag und Bekanntmachung des Hinweises auf die Patenterteilung: **14.07.2004**
(21) Anmeldenummer: 01119536.9
(22) Anmeldetag: 15.08.2001
(51) Int. Cl.: F02M 37/10, F02B 39/10

(54) **Abgasturbolader für eine Brennkraftmaschine**
Turbocharger for an internal combustion engine
Turbocompresseur pour un moteur à combustion interne

(30) Priorität: 17.08.2000 DE 10040122
(43) Veröffentlichungstag der Anmeldung: 27.02.2002
(73) Patentinhaber: DaimlerChrysler AG, 70567 Stuttgart (DE)
(72) Erfinder: Finger, Helmut, 70771 Leinfelden-Echterdingen (DE); Fledersbacher, Peter, 70619 Stuttgart (DE); Löffler, Paul, 70199 Stuttgart (DE); Sumser, Siegfried, 70184 Stuttgart (DE); Wirbeleit, Friedrich, Dr., 73733 Esslingen (DE)

(56) Entgegenhaltungen:
- DE-A- 3 304 845
- DE-A- 3 339 918
- US-A- 4 253 031
- US-A- 5 870 894

## Beschreibung

Die Erfindung bezieht sich auf einen Abgasturbolader für eine Brennkraftmaschine nach dem Oberbegriff des Anspruches 1.

In der Druckschrift DE-OS 28 08 147 wird ein derartiger Abgasturbolader beschrieben, welcher eine von den Motorabgasen beaufschlagte Abgasturbine und ein von der Abgasturbine angetriebenes Verdichterrad im Ansaugtrakt der Brennkraftmaschine umfasst, über das angesaugte Verbrennungsluft auf einen erhöhten Ladedruck verdichtet wird. In den Abgasturbolader ist ein Elektromotor integriert, dessen Anker auf einer Welle zwischen Turbinen- und Verdichterrad sitzt und dessen Stator ortsfest im Gehäuse des Laders sitzt und den Anker radial umgreift. Durch Betätigung des Elektromotors wird dem Abgasturbolader zusätzlich Energie zugeführt, so dass insbesondere in Betriebszuständen der Brennkraftmaschine, in denen der Abgasgegendruck für die Erzeugung eines ausreichend hohen Ladedrucks nicht ausreicht, der Verdichter zusätzlich angetrieben werden kann und ein gewünschtes Ladedruckniveau eingestellt werden kann.

Der Elektromotor kann auch als Generator eingesetzt werden, sofern die von der Abgasturbine gewonnene Energie größer ist als die im Verdichter für die Erzeugung des benötigten Ladedrucks erforderlich Energie. Durch die motorische Nutzung und die Nutzung als Generator kann der Gesamtwirkungsgrad verbessert werden.

Der Anker des Elektromotors erstreckt sich axial über die Länge der Welle zwischen Turbine und Verdichter, so dass das Massenträgheitsmoment der rotierenden Teile des Abgasturboladers gegenüber einer Ausführung ohne Elektromotor deutlich höher ist. Die Erhöhung des Massenträgheitsmoments verschlechtert wiederum den Wirkungsgrad des Laders.

Vergleichbare Abgasturbolader, die mit Elektromotoren gekoppelt sind, werden auch in den Druckschriften EP 0 420 666 A1, US 5 605 045 und US 5 074 115 beschrieben.

Eine weitere Ausführung eines elektromotorisch angetriebenen Abgasturboladers geht aus der US 5 870 894 hervor. Gemäß dieser Druckschrift weist das Verdichterrad auf seiner der Turbine zugewandten Rückseite in einem radial rückgesetzten Absatz einen drehfest mit dem Verdichterrad verbundenen Magneten auf, der mit gehäusefesten, bestrombaren Spulen zusammenwirkt. Zwar wird in dieser Ausführung eine verhältnismäßig kompakte Bauform erreicht; die Magnete auf der Rückseite des Verdichterrades schränken jedoch die Gestaltungsmöglichkeiten des Verdichterrades ein. Zudem muss dieser Ausführung ebenfalls das Massenträgheitsmoment des Verdichterrades erhöht werden, um eine signifikante Leistungssteigerung durch Zuschaltung des Elektromotors erreichen zu können.

Die Druckschrift US 4 253 031 zeigt einen Abgasturbolader, dessen Verdichter mit dem Rotor eines Elektromotors drehverbunden ist, wobei der Rotor von einem Stator im Verdichtergehäuse umgriffen ist. Der Rotor befindet sich am Verdichterradrücken auf der dem Turbinenrad zugewandten Seite des Verdichterrades. Die Verdichterradschaufeln schirmen den Rotor und den Stator des Elektromotors ab, so dass die zugeführte Verbrennungsluft nicht in Kontakt mit dem Elektromotor gelangen kann, sondern unmittelbar radial in den Diffusor im Verdichtergehäuse und weiter in einen Verdichterabströmkanal geleitet wird.

Die zusätzliche Masse des Rotors des Elektromotors erhöht auch das Trägheitsmoment der rotierenden Teile des Abgasturboladers. Zur Vermeidung eines verschlechterten transienten Verhaltens des Laders muss ein Teil der vom Elektromotor eingespeisten Antriebsenergie für die Überwindung des erhöhten Trägheitsmomentes aufgewandt werden.

Dies gilt auch für die weiteren, im Recherchenbericht genannten Druckschriften DE 33 04 845 A1 sowie DE 33 39 918 A1. Gemäß einem in der DE 33 04 845 A1 gezeigten Ausführungsbeispiel befindet sich der Rotor des zusätzlich für den Antrieb vorgesehenen Elektromotors in der Mitte zwischen zwei benachbarten und zusammenwirkenden Verdichterradern, die von entgegengesetzten axialen Richtungen angeströmt werden. Auch der in dieser Druckschrift offenbarte Rotor stellt ein zusätzliches, das Massenträgheitsmoment erhöhendes Bauteil dar, das nicht Bestandteil des Verdichterrades ist und somit auch nicht an der Strömungsführung teilnimmt.

Auch die weitere Druckschrift DE 33 39 918 A1 geht nicht über das hinaus, was in der US 4 253 031 oder US 5 870 894 offenbart ist.

Der Erfindung liegt das Problem zugrunde, einen Abgasturbolader für eine Brennkraftmaschine mit elektromotorischem Zusatzantrieb zu schaffen, wobei sich die Konstruktion durch einen hohen Wirkungsgrad und weitgehende Gestaltungsmöglichkeiten auszeichnen soll.

Dieses Problem wird erfindungsgemäß mit den Merkmalen des Anspruches 1 gelöst. Die Unteransprüche enthalten zweckmäßige Weiterbildungen. Bei dem erfindungsgemäßen Abgasturbolader bildet der Rotor des Elektromotors mit dem Verdichterrad des Verdichters ein einteiliges Bauteil, wobei der Rotor zugleich strömungsgünstig konturiert ist und dadurch auch Funktionen des Verdichterrades übernimmt. Da der Rotor nunmehr kein zusätzliches Bauteil bildet, sondern vielmehr identisch ist mit dem Verdichterrad oder einem Teil des Verdichterrades, kann ein größtmögliches Maß an Kompaktheit realisiert werden.

Die Form des Rotors wird wesentlich durch die Funktion als Verdichterrad bestimmt. Sowohl die axiale Länge als auch die radiale Erstreckung des Verdichterrads können praktisch ohne einschränkende Bedingungen an strömungstechnische Erfordernisse angepasst werden, ebenso die Form und die Gestaltung des Verdichterrades. Zugleich können die Dimensionen des Verdichterrades aufgrund der Integration des Rotors in das Rad im Prinzip beibehalten werden, so dass auch Massenträgheitsmoment des Verdichterrades nicht oder nicht wesentlich ansteigt.

Ein weiterer Vorteil liegt darin, das der elektromotorische Antrieb vom Schmieröl des Abgasturboladers separiert ist. Der Rotor liegt auf der Luftseite des Verdichterrades, die zur Reinhaltung der Verbrennungsluft nicht mit dem Schmiersystem in Kontakt kommt.

In einer ersten zweckmäßigen Ausführung besteht das gesamte Verdichterrad aus einem elektrisch leitfähigen Material, so dass das gesamte Verdichterrad als Rotor anzusehen ist. Diese Ausführung zeichnet sich durch einen homogenen Materialaufbau im Verdichterrad aus.

In einer zweiten zweckmäßigen Ausführung bilden Verdichterrad und Rotor zwar ein gemeinsames Bauteil, bestehen jedoch aus unterschiedlichen Materialien, wobei das Verdichterrad insbesondere aus einem elektrisch nicht leitfähigen Material geringerer Dichte als der Rotor aufgebaut sein kann, um das Massenträgheitsmoment weiter zu reduzieren. Auch in dieser Ausführung ist der Rotor strömungsgünstig konturiert und ist strömungstechnisch als Bestandteil des Verdichterrades anzusehen. Diese Ausführung bietet den Vorteil, dass konventionelle Abgasturbolader nachträglich in erfindungsgemäßer Weise mit einem strömungsgünstig konturierten Rotor ausgerüstet werden können, um einen elektromotorischen Zusatzantrieb zu schaffen, und außerdem gegebenenfalls auch das Strömungsverhalten des Verdichterrades positiv beeinflusst werden kann.

In bevorzugter Weiterbildung ist das Verdichterrad funktional in ein Vorsatzläuferrad und ein Hauptrad aufgeteilt, wobei das Vorsatzläuferrad den Rotor bildet und das Hauptrad in Strömungsrichtung dem Vorsatzläuferrad nachgeordnet ist. Man erhält durch diese funktional zweiteilige Ausführung des Verdichterrades zusätzliche Gestaltungsmöglichkeiten, über die das Verdichterverhalten positiv beeinflussbar ist. Das Vorsatzläuferrad und das Hauptrad können beispielsweise mit sich jeweils unterscheidenden freien Strömungsquerschnitten ausgestattet sein, wobei über das Verhältnis der Strömungsquerschnitte von Vorsatzläuferrad und Hauptrad die Verdichtereigenschaften in gewünschter Weise beeinflussbar sind. Beispielsweise kann die Pumpgrenze des Verdichters positiv verändert werden, indem der Strömungsquerschnitt im Vorsatzläuferrad kleiner gewählt wird als der Strömungsquerschnitt im Hauptrad und dadurch das Durchsatzverhalten des Gesamtverdichterrades beeinflusst wird. Andererseits kann bei einem umgekehrten Verhältnis der Strömungsquerschnitte - Strömungsquerschnitt im Vorsatzläuferrad ist größer als Strömungsquerschnitt im Hauptrad - die Luftströmung bis zum Hauptrad beschleunigt werden.

Eine weitere vorteilhafte Gestaltungsmöglichkeit im Hinblick auf die Aerodynamik des Gesamtverdichterrades liegt in der Wahl der Schaufelanzahl im Vorsatzläuferrad und im Hauptrad. Es ist beispielsweise möglich, im Vorsatzläuferrad nur die halbe Schaufelanzahl wie im Hauptrad vorzusehen, wodurch insbesondere das Gewicht und das Massenträgheitsmoment des Vorsatzläuferrades reduziert werden kann. Darüber hinaus bietet das Vorsatzläuferrad an dieser Ausführung einen geringeren Strömungswiderstand.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Abgasturbolader für eine Brennkraftmaschine, wobei das Verdichterrad des Verdichters zugleich einen Rotor eines Elektromotors bildet,
- Fig. 2: einen Schnitt durch einen Verdichter in einer weiteren Ausführung.

In den folgenden Figuren sind gleiche Bauteile mit gleichen Bezugszeichen versehen.

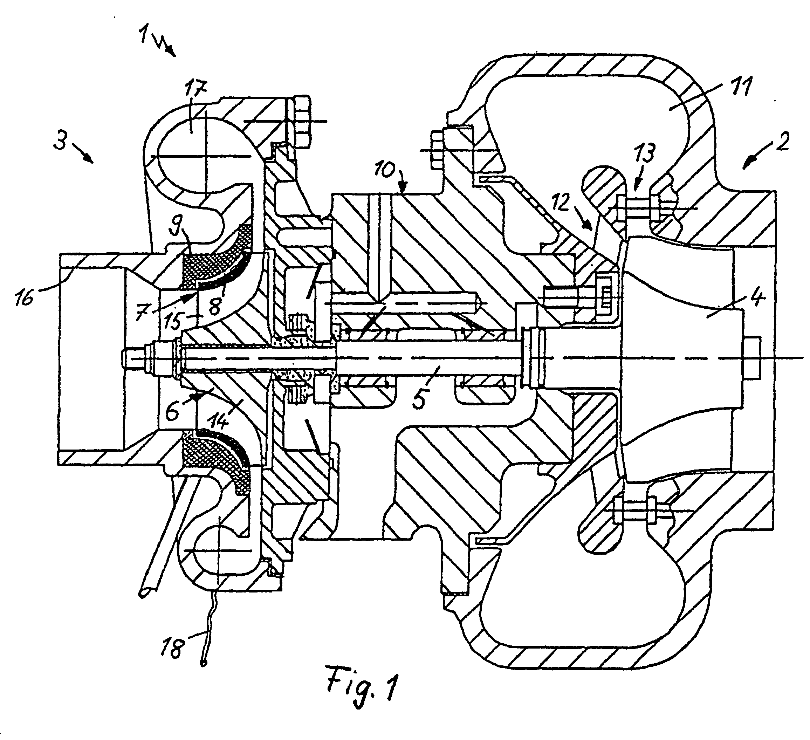

Der in Fig. 1 dargestellte Abgasturbolader 1 umfasst eine Abgasturbine 2 und einen Verdichter 3 in einem gemeinsamen Gehäuse 10. Die Abgasturbine 2 ist als Halbaxial-/Radialturbine ausgeführt, der über einen Zuströmkanal 11 Abgas aus dem Abgasstrang der Brennkraftmaschine zuführbar ist, wobei der Zuströmkanal 11 einen halbaxialen Strömungseintrittsquerschnitt 12 und zweckmäßig auch einen radialen Strömungseintrittsquerschnitt 13 zum Turbinenrad 4 der Abgasturbine 2 aufweist. Im Bereich des radialen Strömungseintrittsquerschnitts 13 ist vorteilhaft eine variable Turbinengeometrie vorgesehen, über die der freie Querschnitt variabel zwischen einer Staustellung und einer Öffnungsstellung eingestellt werden kann.

Das Turbinenrad 4 ist über eine Welle 5 mit einem Verdichterrad 6 des Verdichters 3 verbunden. Das Verdichterrad 6 besteht aus einer Radnabe 14 und einstückig mit der Radnabe 14 verbundenen Verdichterradschaufeln 15. Über das Verdichterrad 6 wird in einen Verdichtereinströmkanal 16 einströmende Verbrennungsluft auf einen erhöhten Ladedruck komprimiert und in einen Verdichteraustrittsbereich 17 abgeleitet.

Das Verdichterrad 6 ist zusätzlich zu dem mechanischen Antrieb über die Welle 5 auch elektrisch über einen Elektromotor 7 antreibbar. Der Elektromotor 7 umfasst einen drehfest mit dem Verdichterrad 6 verbundenen Rotor 8 und einen gehäusefest angeordneten Stator 9, der den Rotor 8 radial umgreift. Der Rotor 8 des Elektromotors 7 ist ringförmig aufgebaut und sitzt auf der radial außen liegenden Kante der Verdichterradschaufeln 15 auf. Der Rotor 8 besteht aus einem magnetischen Material. Bei einer Bestromung des Stators 9 wird eine den Rotor 8 drehende elektromagnetische Kraft erzeugt. Die Bestromung des Stators 9 erfolgt über eine externe Energiequelle, wobei die Höhe der Bestromung in Abhängigkeit aktueller Motorzustandsgrößen eingestellt werden kann. Für einen geregelten Betrieb des Elektromotors 7 ist u.a. die Drehzahl des Verdichterrades 6 über einen Sensor 18 messbar.

Der Elektromotor 7 ist insbesondere in Motorbetriebsweisen zuschaltbar, in denen ein höherer Ladedruck der Verbrennungsluft erwünscht ist, als über den mechanischen Antrieb über die Abgasturbine 2 zu erreichen ist, beispielsweise bei niederen Motordrehzahlen, bei denen sich nur ein vergleichsweise geringer Abgasgegendruck einstellt, der zum Antrieb der Abgasturbine 2 herangezogen werden kann, oder in transienten Obergangsbereichen, beispielsweise beim Beschleunigen.

Der Elektromotor 7 kann vorteilhaft nicht nur zum Antrieb des Verdichterrades 6 eingesetzt werden, sondern auch als Generator. In Motorbetriebszuständen, in denen über den anliegenden Abgasgegendruck eine höhere Turbinenleistung und damit potenziell eine höhere Verdichterleistung zur Verfügung steht als aktuell für die Verdichtung der Verbrennungsluft benötigt wird, kann die Drehzahl des Laders durch einen Generatorbetrieb des Elektromotors 7 gebremst und dadurch Strom erzeugt werden, der einem Stromspeicher zugeführt werden kann. Die Einstellung des Arbeitsbetriebs oder des Generatorbetriebs des Elektromotors 7 erfolgt in Abhängigkeit der Motorzustands- und Kenngrößen über eine Regelungs- und Steuerungseinrichtung.

Der Rotor 8 des Elektromotors 7 ist vorteilhaft als magnetischer Deckring ausgebildet, der auf den radial außen liegenden Kanten der Verdichterradschaufeln 15 aufsitzt und drehfest mit dem Verdichterrad 6 verbunden ist. In dieser Ausführung ist der Rotor 8 zwar einteilig mit dem Verdichterrad 6 ausgeführt; die Beschaufelung des Verdichterrades 6 und der Rotor 8 können jedoch aus unterschiedlichen Materialien bestehen, wobei die Radnabe 14 und die Verdichterradschaufeln 15 zur Reduzierung des Massenträgheitsmomentes zweckmäßig aus einem Material geringer Dichte bestehen, beispielsweise aus einer Aluminiumlegierung.

Der Elektromotor 7 ist auf der Luftseite des Abgasturboladers 1 angeordnet. Der Rotor 8 des Elektromotors 7 ist strömungsgünstig konturiert, so dass die Strömungsverhältnisse im Verdichter 3 positiv beeinflusst werden und das Verdichterverhalten verbessert wird.

Zwischen dem Rotor 8 und dem gehäusefesten Stator 9 ist ein Luftspalt gebildet, der gegebenenfalls zur Erzeugung einer Rezirkulationsströmung herangezogen werden kann, um die Pumpgrenze des Verdichters positiv zu beeinflussen. Über die Oberflächengestaltung des als Deckring ausgeführten Rotors 8 kann der Drall der Rezirkulationsströmung beeinflusst werden.

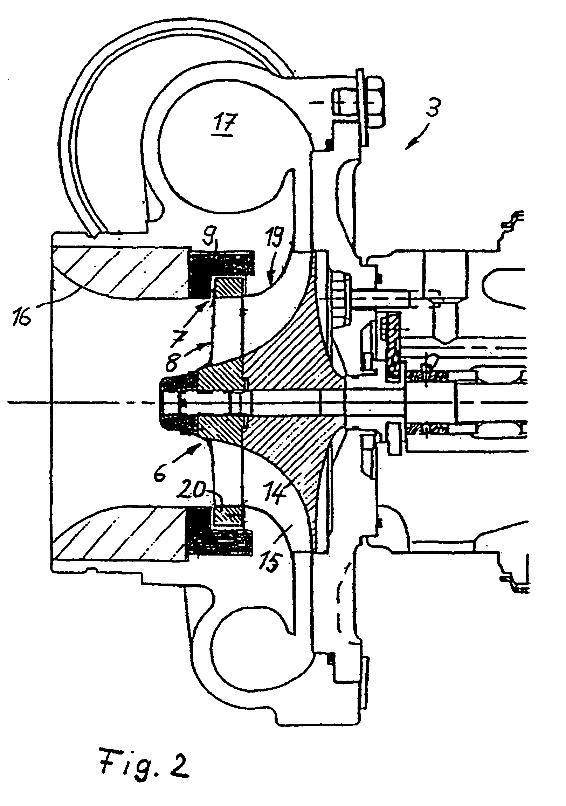

Im Ausführungsbeispiel gemäß Fig. 2 ist das Verdichterrad 6 axial in zwei Bereiche aufgeteilt, nämlich in ein Vorsatzläuferrad, gebildet vom Rotor 8 des Elektromotors 7, und ein Hauptrad 19, gebildet durch die Radnabe 14 und die Verdichterradschaufeln 15. Das Vorsatzläuferrad - der Rotor 8 - ist stromauf des Hauptrades 9 angeordnet und liegt gegenüber dem Hauptrad 19 stromauf in Verdichtereinströmkanal 16 des Verdichters 3. Der Rotor 8 weist axial eine geringere Breite auf als das Hauptrad 19 und weist radial im wesentlichen die gleiche Erstreckung auf wie das Hauptrad. Der Rotor 8 weist einen ähnlichen Grundaufbau auf wie das Hauptrad 19 und besteht aus einer Radnabe und sich daran radial erstreckenden Radschaufeln. Radial außen liegend sind die Radschaufeln des Rotors 8 von einem magnetischen Deckring 20 umfasst, welcher radial vom gehäusefesten, ringförmigen Stator 9 umgriffen ist. Die Beschaufelung des Rotors 8 ist strömungsgünstig konturiert und insbesondere unter strömungsoptimierten Kriterien an die Beschaufelung des Hauptrades 19 angepasst. Hierbei kann es zweckmäßig sein, im Rotor 8 lediglich die halbe Schaufelanzahl vorzusehen wie im Hauptrad 19.

Der magnetische Deckring 20 des Rotors 8 kann einstückig mit der Beschaufelung des Rotors ausgebildet sein. Gemäß einer alternativen vorteilhaften Ausführung ist es auch möglich, den Deckring 20 als separates Bauteil auszubilden, jedoch fest mit der Beschaufelung des Rotors 8 zu verbinden, um ein einteiliges Bauteil herzustellen.

Die vorbeschriebenen Abgasturbolader mit elektromotorischem Antrieb bzw. Generatorbetrieb können sowohl in der befeuerten Antriebsbetriebsweise als auch im Motorbremsbetrieb der Brennkraftmaschine eingesetzt werden.

## Patentansprüche

1. Abgasturbolader für eine Brennkraftmaschine, mit einer im Abgasstrang der Brennkraftmaschine angeordneten Abgasturbine (2) und einem im Ansaugtrakt angeordneten Verdichter (3), der über eine Welle (5) mit der Abgasturbine (2) verbunden ist, wobei zumindest ein rotationsbewegliches Bauteil des Abgasturboladers (1) von einem Elektromotor (7) antreibbar ist,
**dadurch gekennzeichnet,**
**dass** der Rotor (8) des Elektromotors (7) auf der Luftseite des Verdichterrades liegt und einteilig mit dem Verdichterrad (6) des Verdichters (3) ausgebildet und strömungsgünstig konturiert ist und strömungstechnisch ein Bestandteil des Verdichterrades bildet und sich bis zur radialen Außenkante des Verdichterrads (6) erstreckt.

2. Abgasturbolader nach Anspruch 1,
**dadurch gekennzeichnet,**
**dass** der Stator (9) des Elektromotors (7) im Verdichtergehäuse (10) angeordnet ist und den Rotor (8) ringförmig umgreift.

3. Abgasturbolader nach Anspruch 1 oder 2,
**dadurch gekennzeichnet,**
**dass** das gesamte Verdichterrad (6) aus einem elektrisch leitfähigen Material besteht.

4. Abgasturbolader nach einem der Ansprüche 1 bis 3,
**dadurch gekennzeichnet,**
**dass** der Rotor (8) Verdichterradschaufeln (15) aufweist.

5. Abgasturbolader nach einem der Ansprüche 1 bis 4,
**dadurch gekennzeichnet,**
**dass** das Verdichterrad (6) ein Vorsatzläuferrad und ein Hauptrad (19) umfasst und dass der Rotor (8) das Vorsatzläuferrad bildet.

6. Abgasturbolader nach Anspruch 5,
**dadurch gekennzeichnet,**
**dass** der freie Strömungsquerschnitt im Vorsatzläuferrad sich vom freien Strömungsquerschnitt vom Hauptrad (19) unterscheidet.

7. Abgasturbolader nach Anspruch 6,
**dadurch gekennzeichnet,**
**dass** der freie Strömungsquerschnitt im Vorsatzläuferrad größer ist als der freie Strömungsquerschnitt im Hauptrad (19).

8. Abgasturbolader nach einem der Ansprüche 5 bis 7,
**dadurch gekennzeichnet,**
**dass** die Schaufelanzahl im Vorsatzläuferrad sich der Schaufelanzahl im Hauptrad (19) unterscheidet.

9. Abgasturbolader nach Anspruch 8,
**dadurch gekennzeichnet,**
**dass** das Vorsatzläuferrad die halbe Schaufelanzahl aufweist wie das Hauptrad (19).

10. Abgasturbolader nach einem der Ansprüche 5 bis 9,
**dadurch gekennzeichnet,**
**dass** das Hauptrad (19) aus einem spezifisch leichteren Material besteht als das Vorsatzläuferrad.

11. Abgasturbolader nach einem der Ansprüche 1 bis 10,
**dadurch gekennzeichnet,**
**dass** der Rotor (8) drehfest mit der Welle (5) verbunden ist.

12. Abgasturbolader nach einem der Ansprüche 1 bis 11,
**dadurch gekennzeichnet,**
**dass** der Rotor (8) einen radial umgreifenden Deckring (10) aufweist.

13. Abgasturbolader nach einem der Ansprüche 1 bis 12,
**dadurch gekennzeichnet,**
**dass** zwischen der radialen Außenseite des Rotors (8) und der radialen Innenseite des Stators (9) ein Rezirkulationsspalt zur Rezirkulation zuströmender Verbrennungsluft gebildet ist.

## Claims

1. Exhaust gas turbocharger for an internal-combustion engine, comprising an exhaust gas turbine (2) arranged in the exhaust gas line of the internal-combustion engine, and a compressor (3) arranged in the intake section and connected to the exhaust gas turbine (2) via a shaft (5), at least one rotatable component of the exhaust gas turbocharger (1) being drivable by an electric motor (7), **characterised in that** the rotor (8) of the electric motor (7) is located on the air side of the compressor wheel and is integrally designed with the compressor wheel (6) of the compressor (3) and is contoured in a manner which is favourable to flow and, in terms of flow, forms a component of the compressor wheel and extends up to the radial outer edge of the compressor wheel (6).

2. Exhaust gas turbocharger according to claim 1, **characterised in that** the stator (9) of the electric motor (7) is arranged in the compressor housing (10) and annularly surrounds the rotor (8).

3. Exhaust gas turbocharger according to claim 1 or 2, **characterised in that** the entire compressor wheel (6) consists of an electrically conductive material.

4. Exhaust gas turbocharger according to any one of claims 1 to 3, **characterised in that** the rotor (8) has compressor wheel blades (15).

5. Exhaust gas turbocharger according to any one of claims 1 to 4, **characterised in that** the compressor wheel (6) comprises an auxiliary rotor wheel and a main wheel (19) and **in that** the rotor (8) forms the auxiliary rotor wheel.

6. Exhaust gas turbocharger according to claim 5, **characterised in that** the free flow cross-section in the auxiliary rotor wheel differs from the free flow cross-section of the main wheel (19).

7. Exhaust gas turbocharger according to claim 6, **characterised in that** the free flow cross-section in the auxiliary rotor wheel is greater than the free flow cross-section in the main wheel (19).

8. Exhaust gas turbocharger according to any one of claims 5 to 7, **characterised in that** the number of blades in the auxiliary rotor wheel differs from the number of blades in the main wheel (19).

9. Exhaust gas turbocharger according to claim 8, **characterised in that** the auxiliary rotor wheel has half as many blades as the main wheel (19).

10. Exhaust gas turbocharger according to any one of claims 5 to 9, **characterised in that** the main wheel (19) consists of a specifically lighter material than the auxiliary rotor wheel.

11. Exhaust gas turbocharger according to any one of claims 1 to 10, **characterised in that** the rotor (8) is connected to the shaft (5) in a rotationally fixed manner.

12. Exhaust gas turbocharger according to any one of claims 1 to 11, **characterised in that** the rotor (8) has a radially surrounding cover ring (10).

13. Exhaust gas turbocharger according to any one of claims 1 to 12, **characterised in that** a recirculation gap for the recirculation of inflowing combustion air is formed between the radial outer side of the rotor (8) and the radial inner side of the stator (9).

## Revendications

1. Turbocompresseur à gaz d'échappement pour un moteur à combustion interne, comportant une turbine à gaz d'échappement (2) agencée dans le circuit des gaz d'échappement du moteur à combustion interne et un compresseur (3) qui est agencé dans le circuit d'aspiration et qui est relié à la turbine à gaz d'échappement (2) via un arbre (5), au moins un composant rotatif du turbocompresseur à gaz d'échappement (1) étant susceptible d'être entraîné par un moteur électrique (7),
**caractérisé en ce que**
le rotor (8) du moteur électrique (7) se trouve sur le côté air de la roue de compresseur, est relié d'un seul tenant avec la roue (6) du compresseur (3), présente un contour avantageux sur le plan de l'écoulement, forme un composant de la roue de compresseur sur le plan de l'écoulement, et s'étend jusqu'à l'arête extérieure radiale de la roue (6) du compresseur.

2. Turbocompresseur à gaz d'échappement selon la revendication 1, **caractérisé en ce que** le stator (9) du moteur électrique (7) est agencé dans le boîtier (10) du compresseur et entoure en forme annulaire le rotor (8).

3. Turbocompresseur à gaz d'échappement selon l'une ou l'autre des revendications 1 et 2, **caractérisé en ce que** la totalité de la roue (6) du compresseur est constituée d'un matériau électriquement conducteur.

4. Turbocompresseur à gaz d'échappement selon l'une des revendications 1 à 3, **caractérisé en ce que** le rotor (8) comprend des aubes de roue de compresseur (15).

5. Turbocompresseur à gaz d'échappement selon l'une des revendications 1 à 4, **caractérisé en ce que** la roue (6) du compresseur comprend une roue préliminaire et une roue principale (19), et **en ce que** le rotor (8) forme la roue préliminaire.

6. Turbocompresseur à gaz d'échappement selon la revendication 5, **caractérisé en ce que** la section transversale d'écoulement libre dans la roue préliminaire est différente de la section transversale d'écoulement libre de la roue principale (19).

7. Turbocompresseur à gaz d'échappement selon la revendication 6, **caractérisé en ce que** la section transversale d'écoulement libre dans la roue préliminaire est supérieure à la section transversale d'écoulement libre dans la roue principale (19).

8. Turbocompresseur à gaz d'échappement selon l'une des revendications 5 à 7, **caractérisé en ce que** le nombre d'aubes dans la roue préliminaire est différent du nombre d'aubes dans la roue principale (19).

9. Turbocompresseur à gaz d'échappement selon la revendication 8, **caractérisé en ce que** la roue préliminaire présente la moitié du nombre d'aubes de la roue principale (19).

10. Turbocompresseur à gaz d'échappement selon l'une des revendications 5 à 9, **caractérisé en ce que** la roue principale (19) est constituée d'un matériau spécifiquement plus léger que celui de la roue préliminaire.

11. Turbocompresseur à gaz d'échappement selon l'une des revendications 1 à 10, **caractérisé en ce que** le rotor (8) est relié solidairement en rotation à l'arbre (5).

12. Turbocompresseur à gaz d'échappement selon l'une des revendications 1 à 11, **caractérisé en ce que** le rotor (8) comprend une bague de couverture (10) qui le coiffe radialement.

13. Turbocompresseur à gaz d'échappement selon l'une des revendications 1 à 12, **caractérisé en ce qu'**un intervalle de recirculation pour la recirculation d'air de combustion affluant est formé entre le côté extérieur radial du rotor (8) et le côté intérieur radial du stator (9).
